# EUROPEAN PATENT APPLICATION

(11) **EP 4 535 055 A1**
(43) Date of publication of application: **09.04.2025**
(21) Application number: 23815466.0
(22) Date of filing: 25.01.2023
(51) Int. Cl.: G02B 6/36, B08B 1/04

(54) **OPTICAL CONNECTOR CLEANING TOOL**

(30) Priority: 03.06.2022 JP 2022091040
(71) Applicant: Fujikura Ltd., Tokyo 135-8512 (JP)
(72) Inventor: SAKAGUCHI, Yuya, Sakura-shi, Chiba 285-8550 (JP); FUJITA, Shunsuke, Tokyo 135-8512 (JP)
(74) Representative: Ter Meer Steinmeister & Partner
(86) International application number: PCT/JP2023/002317
(87) International publication number: WO 2023/233702

(57) **Abstract**

An optical connector cleaning tool includes a cleaning shaft (105) that comprises a pressing surface and that holds a cleaning element (2) so that the cleaning element (2) is turned back at the pressing surface that pressing the cleaning element (2) against the connection end surface, a feeding bobbin (30) that supplies the cleaning element (2) to the pressing surface via a supply path; and a winding bobbin (40) that collects the cleaning element (2) from the pressing surface via a collection path. The supply path and the collection path are along the upper and lower surfaces of the cleaning shaft (105). The optical connector cleaning tool includes an opening that reverses the supply path and the collection path between the upper surface side and the lower surface side.

## Description

### [TECHNICAL FIELD]

The present invention relates to an optical connector cleaning tool that cleans a connection end surface of an optical connector.

For designated countries that are permitted to be incorporated by reference in the literature, the contents of Patent Application No. 2022-091040 filed with Japan Patent Office on June 3, 2022 is incorporated herein by reference and is regarded as a part of the description of this specification.

### [BACKGROUND ART]

As an optical connector cleaning tool that cleans a connection end surface of an optical connector with a cleaning tape, it is known one where a head part around which the cleaning tape is wound is included and the head part includes a head plate having a tape pressing surface that presses the cleaning tape against the connection end surface of the optical connector, an elastically deformable spring part, and a head support part that tiltably supports the head plate via the spring part (refer to, for example, Patent Document 1 (paragraphs [0007], [0008], and FIG 24(a) to FIG. 24(d))).

### [CITATION LIST]

### [PATENT DOCUMENT]

PATENT DOCUMENT 1: JP 2008-46218 A

### [SUMMARY OF THE INVENTION]

### [Problems to be solved by Invention]

Some connection end surfaces of optical connectors to be cleaned have an inclination angle (typically 8 degrees) with respect to the optical axis in order to suppress the incidence of reflected light. When cleaning the connection end surface with the above-described optical connector cleaning tool, the head plate is pulled by the tension applied to the cleaning tape at the time of collecting the cleaning tape, and the inclination direction of the tape pressing surface becomes opposite to the inclination direction of the connection end surface, therefore the connection end surface of the optical connector may be not properly cleaned.

An object of the present invention is to provide an optical connector cleaning tool that is capable of properly cleaning the connection end surface of the optical connector by switching an inclination direction of a pressing surface.

### [MEANS FOR SOLVING PROBLEM]

[1] An aspect 1 of the present invention is an optical connector cleaning tool that cleans a connection end surface of an optical connector, the optical connector cleaning tool comprising: a cleaning shaft that comprises a pressing surface and that holds a cleaning element having a belt shape so that the cleaning element is turned back at the pressing surface that presses the cleaning element against the connection end surface; a supply part that supplies the cleaning element to the pressing surface via a supply path; and a collection part that collects the cleaning element from the pressing surface via a collection path, wherein the cleaning shaft comprises: a first main surface; and a second main surface opposite to the first main surface, the supply path and the collection path are along the first and second surfaces, and the optical connector cleaning tool comprises a path reversing part that reverses the supply path and the collection path between the first main surface side and the second main surface side.
[2] An aspect 2 of the present invention may be the optical connector cleaning tool of the aspect 1, wherein the path reversing part may include an opening or a groove that penetrates between the first main surface and the second main surface and at which the supply path and the collection path cross each other.
[3] An aspect 3 of the present invention may be the optical connector cleaning tool of the aspect 2, wherein the path reversing part may reverse the supply path and the collection path while ensuring a non-contact state between the cleaning element passing through the supply path and the cleaning element passing through the collection path.
[4] An aspect 4 of the present invention may be the optical connector cleaning tool of any one of the aspects 1 to 3, wherein the path reversing part may include: a first opening or a first groove that guides the cleaning element passing through the supply path from the first main surface side to the second main surface side; and a second opening or a second groove that guides the cleaning element passing through the collection path from the first main surface side to the second main surface side.
[5] An aspect 5 of the present invention may be the optical connector cleaning tool of the aspect 4, wherein the first opening and the second opening may be shifted from each other in a longitudinal direction of the cleaning shaft.
[6] An aspect 6 of the present invention may be the optical connector cleaning tool of the aspect 4 or 5, wherein the first opening may have a shape in which a width of the first opening is narrower toward a front end of the cleaning shaft, and the second opening may have a shape in which a width of the second opening is narrower toward a rear end of the cleaning shaft.
[7] An aspect 7 of the present invention may be the optical connector cleaning tool of the aspect 4, wherein the first groove and the second groove may include spiral grooves formed on an outer circumferential surface of the cleaning shaft.
[8] An aspect 8 of the present invention may be the optical connector cleaning tool of the aspect 4 or 7, wherein the cleaning shaft may comprise a rotating part disposed between the first groove and the second groove, and the rotating part may rotate a front end side part of the cleaning shaft with respect to a rear end side part of the cleaning shaft.
[9] An aspect 9 of the present invention may be the optical connector cleaning tool of any one of the aspects 1 to 8, wherein the cleaning shaft may comprise: a head member that comprises the pressing surface; and a support member that supports the head member, and the path reversing part may be disposed in the head member.
[10] An aspect 10 of the present invention may be the optical connector cleaning tool of any one of the aspects 1 to 8, wherein the cleaning shaft may comprise: a head member that comprises the pressing surface; and a support member that supports the head member, and the path reversing part may be disposed in the support member.

### [EFFECT OF THE INVENTION]

In the present invention, the optical connector cleaning tool include the path reversing part that reverses the supply path and the collection path between the first main surface side and the second main surface side. Therefore, according to the present invention, because the path reversing part can reverse the turning-back direction of the cleaning element at the pressing surface, it is possible to switch the inclination direction of the pressing surface and it is possible to properly clean the connection end surface of the optical connector.

### [BRIEF DESCRIPTION OF DRAWING(S)]

FIG. 1 is a front view showing the optical connector as a cleaning object of the optical connector cleaning tool in the embodiment of the present invention;
FIG. 2 is a perspective view showing the optical connector cleaning tool in the embodiment of the present invention;
Fig. 3 is an exploded perspective view of the optical connector cleaning tool in the embodiment of the present invention;
Fig. 4 is an exploded perspective view of the extension member in the embodiment of the present invention;
FIG. 5(a) is a plan view showing the rack shaft in the embodiment of the present invention, FIG. 5(b) is a plan view showing the first modified example of the rack shaft in the embodiment of the present invention, FIG. 5(c) is a plan view showing a the second modified example of the rack shaft in the embodiment of the present invention, and FIG. 5(d) is a partial plan view showing the third modified example of the rack shaft in the embodiment of the present invention;
FIG. 6(a) is a schematic diagram for describing the supply path and collection path for the cleaning element in the embodiment of the present invention, and FIG. 6(b) is a schematic diagram for describing the supply path and collection path for the cleaning element in the comparative example;
FIG. 7 is a perspective view showing the fourth modified example of the rack shaft in the embodiment of the present invention and an enlarged view of a part VII;
FIG. 8(a) is a perspective view showing the first modified example of the cleaning head in the embodiment of the present invention, and FIG. 8(b) is a perspective view showing the second modified example of the cleaning head in the embodiment of the present invention; and
FIG. 9(a) and FIG. 9(b) are side views showing the state of use of the optical connector cleaning tool in the embodiment of the present invention, FIG. 9(a) is a view showing a state where the tool main body is moved toward the extension member, and FIG. 9(b) is a view showing a state where the tool main body is moved backward from the extension member.

### [MODE(S) FOR CARRYING OUT THE INVENTION]

Hereinafter, an embodiment of the invention will be described with reference to the drawings.

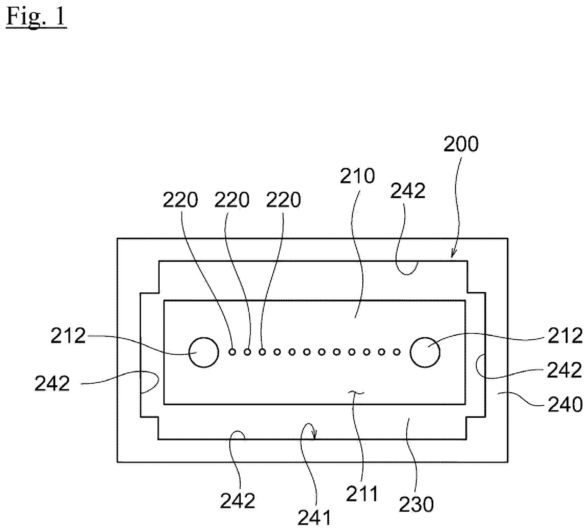

The optical connector cleaning tool 1 in the present embodiment is a cleaner that cleans a connection end surface of an optical connector that connects optical fibers. FIG. 1 is a front view showing the optical connector 200 as a cleaning object of the optical connector cleaning tool 1 in the present embodiment.

Although not particularly limited, the optical connector 200 that is a cleaning object of the optical connector cleaning tool 1 is, for example, a multi-fiber collective connection type optical connector plug that simultaneously connects multiple optical fibers.

Specifically, as shown in FIG. 1, the optical connector 200 includes a ferrule 210 having a flat (rectangular) cross-sectional shape (end surface shape). The ferrule 210 is a so-called MT (Mechanical Transferable) ferrule and has multiple (e.g., 12 (twelve)) fiber holding holes arranged along the cross-sectional longitudinal direction of the ferrule 210. The optical fiber 220 is inserted in each of the fiber holding holes, and the optical fiber 220 is fixed to the ferrule 210 by an adhesive. The optical fibers 220 are exposed from the end surface 211 of the ferrule 210. The ferrule 210 is held in the housing 230.

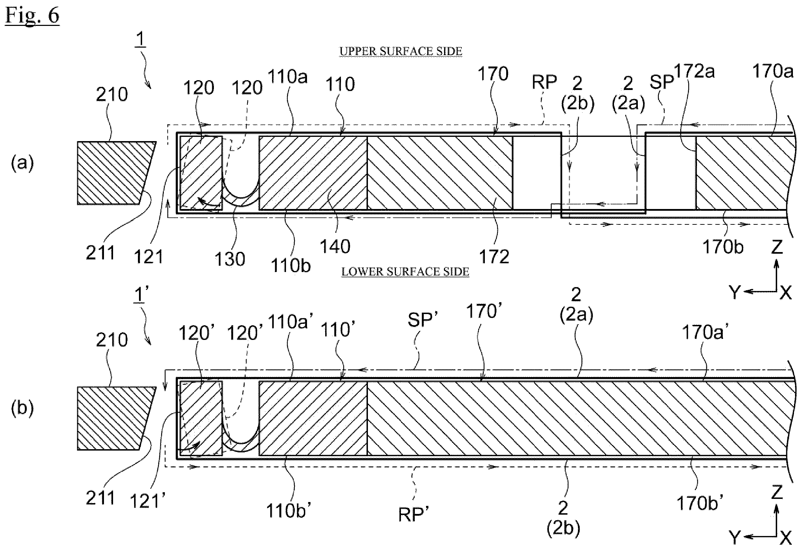

In the present embodiment, the end surface 211 of the ferrule 210 is an obliquely polished end surface (APC) that has an inclination (see FIG. 6(a)). Although not particularly limited, the end surface 211 has an inclination angle of, for example, 8 degrees with respect to a direction perpendicular to the optical axis of the optical fiber 220. The end surface 211 of the ferrule 210 may be a flat polished end surface (UPC) that is not inclined.

The number of the optical fibers 220 held in the ferrule 210 is not particularly limited and may be, for example, more or less than twelve (12). The optical fibers 220 may be arranged in multiple rows (for example, two (2) rows) along the cross-sectional longitudinal direction of the ferrule 210. As the ferrule 210 described above, an MT ferrule specified in JIS C 5981 or JIS C 5982 may be used.

When the pair of optical connectors 200 having the ferrules 210 are connected, the pair of optical connectors 200 are inserted into the insertion ports 241 on both sides of the sleeve-shaped adapter 240. The insertion port 241 includes four grooves 242. The optical fibers 220 exposed from the end surfaces 211 of the ferrules 210 are optically connected to each other by abutting the end surfaces 211 of the ferrules 210 of the pair of optical connectors 200. At this time, the optical connectors 200 are positioned with high accuracy by inserting the guide pins 212 of the one ferrule 210 into the guide holes (not shown) of the other ferrule 210.

If a contaminant such as dirt, dust, and oil is adhered to the end surface 211 of the ferrule 210 at the time of abutting, it may cause damage at the time of attaching and detaching, an increase in transmission loss, and the like. Therefore, the end surface 211 of the ferrule 210 is cleaned using the optical connector cleaning tool 1 described below before the optical connectors 200 are connected. At the time of this cleaning, the optical connector 200 to be cleaned is inserted into one insertion port 241 of the adapter 240, and the end surface 211 of the ferrule 210 of the optical connector 200 is cleaned by inserting the optical connector cleaning tool 1 into the other insertion port 241 of the adapter 240.

Although the optical connector 200 described above is an optical connector plug used in the plug-adapter-plug coupling system, the end surface of the ferrule of the optical connector receptacle used in the plug-receptacle coupling system may be cleaned using the optical connector cleaning tool 1 described below. Specifically, the optical connector receptacle includes a ferrule attached to the ends of the optical fibers and incorporated into a housing into which the optical connector plug is inserted.

Alternatively, a cap having an inner hole having the same shape as the inner hole of the adapter may be attached to the front end of the optical connector cleaning tool 1, and the optical connector plug may be inserted into the cap to clean the connection end surface of the optical connector plug alone in a state where the optical connector plug is not inserted into the adapter.

Hereinafter, the configuration of the optical connector cleaning tool 1 in the present embodiment will be described in detail with reference to the drawings. The optical connector cleaning tool 1 described below has basically the same configuration as the optical connector cleaning tool disclosed in JP 2014-35489 A, JP 2014-35490 A and JP 2014-35491 A except for the configuration of the rack shaft 170.

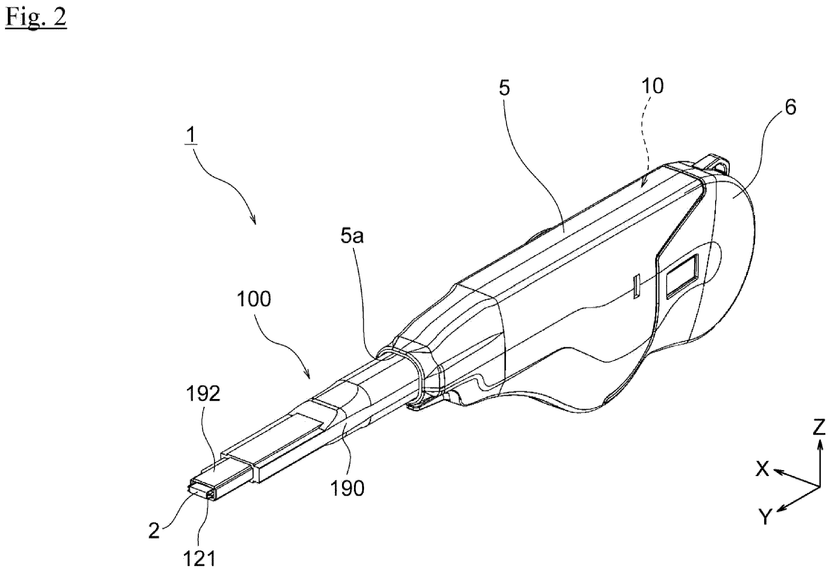

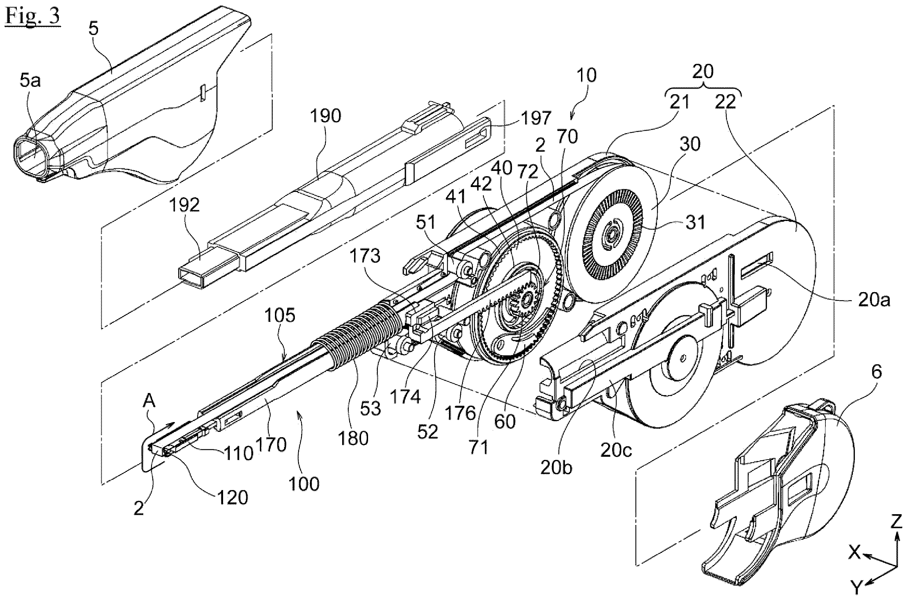

First, the overall configuration of the optical connector cleaning tool 1 in the present embodiment will be described with reference to FIG. 2 and FIG. 3. FIG. 2 is a perspective view showing the optical connector cleaning tool 1 in the present embodiment, and Fig. 3 is an exploded perspective view of the optical connector cleaning tool 1 in the embodiment of the present invention.

As shown in FIG. 2 and FIG. 3, the optical connector cleaning tool 1 (hereinafter, also simply referred to as "cleaning tool 1") in the present embodiment includes a tool main body 10 and an extension member 100 extending from the tool main body 10. The tool main body 10 is covered with the front cover 5 and the rear cover 6. The extension member 100 protrudes forward (the +Y direction in the drawing) from the opening 5a of the front cover 5.

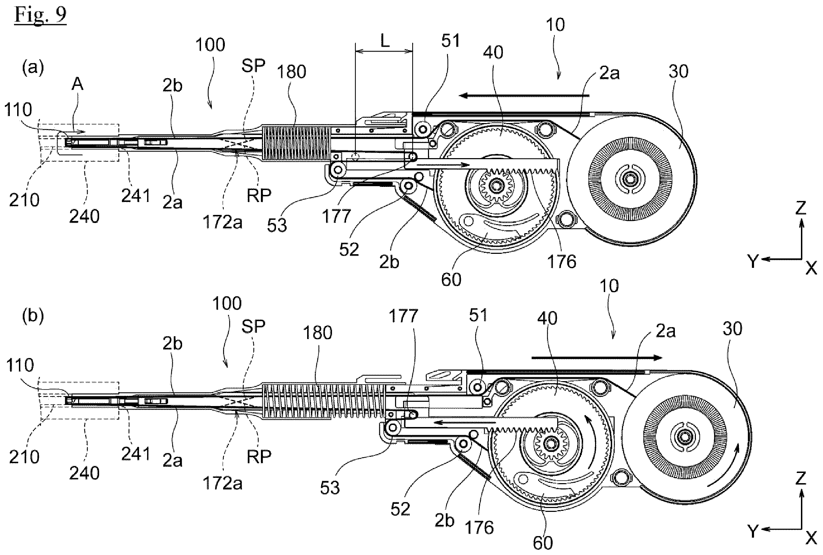

The extension member 100 has the pressing surface 121 (described later) that presses the cleaning element 2 against the connection end surface 211 (the end surface 211 of the ferrule 210 described above) of the optical connector 200 at the front end. The tool main body 10 includes the bobbins 30 and 40 (described later) for supplying and collecting the cleaning element 2 to and from the pressing surface 121. The extension member 100 can relatively move with respect to the tool main body 10 along the axial direction (the Y-axis direction in the drawing) of the extension member 100 (see FIG. 9(a) and FIG. 9(b)).

Since the cleaning element 2 moves on the pressing surface 121 in accordance with the relative movement between the tool main body 10 and the extension member 100 (the forward movement of the tool main body 10 with respect to the extension member 100) and the cleaning element 2 slides while being pressed against the connection end surface 211 of the optical connector 200, it is possible to efficiently wipe off the contaminant adhering to the end surface. However, when the sticky cleaning element is used, it may be configured to only press the cleaning element against the connection end surface 211 without sliding the cleaning element. Further, it is possible to collect the used cleaning element 2 from the pressing surface 121 to the winding bobbin 40 and supply the unused cleaning element 2 from the feeding bobbin 30 to the pressing surface 121 in accordance with the relative movement (the backward movement of the tool main body 10 with respect to the extension member 100).

As described above, the optical connector 200 to be cleaned in the present embodiment is a multi-fiber collective connection type optical connector, and the end surface 211 of the ferrule 210 of the optical connector 200 has a flat shape. Therefore, the cleaning element 2 is an elongate belt-shaped continuous body (tape). The width of the cleaning element 2 is wide enough to wipe the end surfaces of all the optical fibers 220 exposed on the end surface 211 of the ferrule 210 and the periphery thereof (for example, the region between the guide pins 212) at once. Although not particularly limited, as an example of such a tape-shaped cleaning element 2, a woven fabric made of ultrafine fibers made of polyester, nylon, or the like can be exemplified.

Next, the configuration of the tool main body 10 of the cleaning tool 1 in the present embodiment will be described in detail with reference to FIG. 3.

As shown in FIG. 3, the tool main body 10 includes the housing 20, the feeding bobbin 30, the winding bobbin 40, the guide cylinders 51 and 52, the roll 53, the ratchet pawls 60, and the transmission members 70.

The housing 20 includes the first housing 21 and the second housing 22. The feeding bobbin 30, the winding bobbin 40, the guide cylinders 51 and 52, the roll 53, the ratchet pawls 60, and the transmission members 70 are accommodated in the housing 20. Although not particularly limited, the first and second housings 21 and 22 are made of a resin material. The first housing 21 and the second housing 22 are fixed to each other by fitting the fixing pins formed in the second housing 22 to the fixing cylinders formed in the first housing 21.

The feeding bobbin 30 is a reel (cylindrical winding frame) for supplying the cleaning element 2. The unused cleaning element 2 is wound around the feeding bobbin 30. The feeding bobbin 30 is rotatably supported by the support shaft part formed in the first housing 21. As the feeding bobbin 30 rotates in accordance with the above-described backward movement of the tool main body 10 with respect to the extension member 100, the unused cleaning element 2 is fed from the feeding bobbin 30 to the pressing surface 121. In the present embodiment, the unused cleaning element 2 is also referred to as "cleaning element 2a".

The engagement grooves 31 arranged circumferentially are formed on both side surfaces of the feeding bobbin 30. On the other hand, the engagement pawls 20a whose tips that abut against the engagement groove 31 is formed in the first and second housings 21 and 22. The idling rotation of the feeding bobbin 30 is suppressed by the engagement pawls 20a.

The winding bobbin 40 is a reel for winding the used cleaning element 2. The winding bobbin 40 is rotatably supported by the support shaft part formed in the first housing 21. As the winding bobbin 40 rotates in accordance with the above-described backward movement of the tool main body 10 with respect to the extension member 100, the used cleaning element 2 used on the pressing surface 121 is wound around the winding bobbin 40. In the present embodiment, the used cleaning element 2 is also referred to as "cleaning element 2b".

The outer ring portion 41 and the inner ring portion 42 are formed on both side surfaces of the winding bobbin 40. The ratchet gear engaged with the ratchet pawl 60 is formed on the inner peripheral surface of the outer ring portion 41. On the other hand, the inner peripheral surface of the inner ring portion 42 functions as a friction surface that the leaf spring portion 72 of the transmission member 70 contacts.

The ratchet pawls 60 are disposed on both side surfaces of the winding bobbin 40 so as to be interposed between the outer ring portion 41 and the inner ring portion 42. The ratchet pawls 60 are rotatably supported by the support portions of the housings 21 and 22. The ratchet pawl 60 constitutes a ratchet mechanism together with the ratchet gear 411 of the outer ring portion 41. The ratchet mechanism allows the winding bobbin 40 to rotate in a direction (winding direction) in which the cleaning element 2 is wound but prohibits the winding bobbin 40 from rotating in a direction opposite to the winding direction.

The transmission members 70 are disposed inside both of the inner ring portions 42 of the winding bobbin 40. Each of the transmission members 70 is rotatably supported by the above-described support shaft part of the first housing 21 that supports the winding bobbin.

Each of the transmission members 70 includes a pinion gear 71 and a pair of leaf spring portions 72. The pinion gear 71 is engaged with the rack gear 176 (described later) of the extension member 100. The pinion gear 71 and the rack gear 176 constitute a rack and pinion mechanism. The rack and pinion mechanism converts the above-described relative linear motion of the extension member 100 with respect to the tool main body 10 into a rotational motion.

The pair of leaf spring portions 72 is fitted inside the inner ring portion 42 of the winding bobbin 40 in a state in which the leaf spring portions 72 is elastically deformed inward. Therefore, a frictional force acts between each the leaf spring portions 72 and the friction surface of the inner ring portion 42, and the leaf spring portion 72 and the inner ring portion 42 constitute a friction transmission mechanism. The rotational motion converted by the rack and pinion mechanism is transmitted to the winding bobbin 40 via the friction transmission mechanism.

The guide cylinder 51 is rotatably supported by the support shaft part formed in the first housing 21. The guide cylinder 52 is also rotatably supported by another support shaft part formed in the first housing 21. The roll 53 is rotatably supported by the pin held by the first and second housings 21 and 22. The unused cleaning element 2 fed from the feeding bobbin 30 is guided toward the pressing surface 121 of the extension member 100 by the guide cylinder 51. On the other hand, the used cleaning element 2 is guided toward the winding bobbin 40 by the guide cylinder 52 and the roll 53. At this time, the cleaning element 2 is turned back by the roll 53, and the cleaning element 2 is hung around the roll 53.

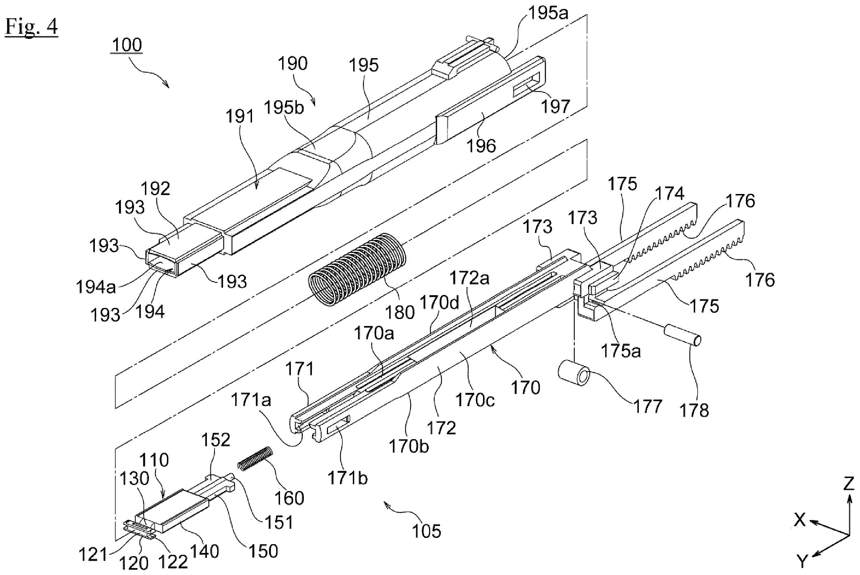

Next, the configuration of the extension member 100 of the cleaning tool 1 in the present embodiment will be described in detail with reference to FIG. 4 to FIG. 6(b).

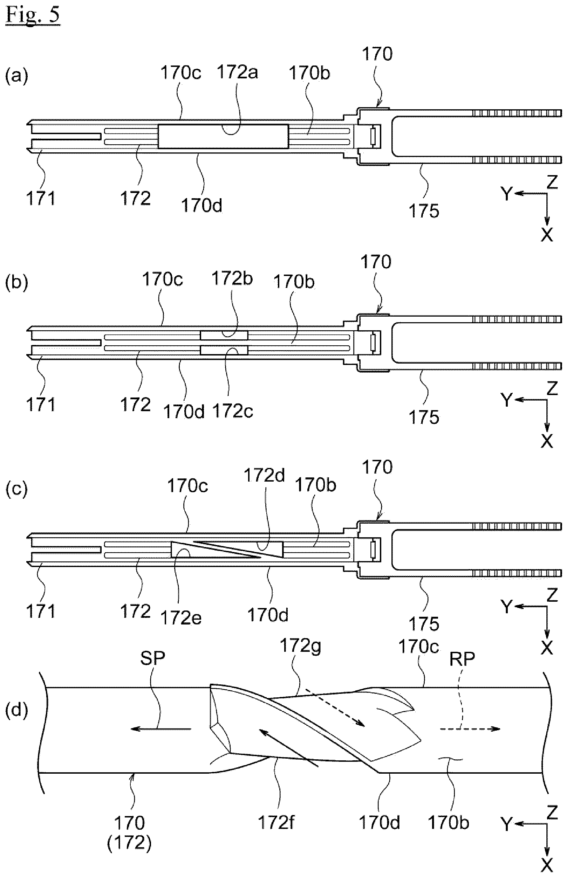

Fig. 4 is an exploded perspective view of the extension member 100 in the present embodiment. FIG. 5(a) is a plan view showing the rack shaft 170 in the present embodiment, FIG. 5(b) and FIG. 5(c) are plan views showing the first and second modified examples of the rack shaft 170 in the present embodiment, and FIG. 5(d) is a partial plan view showing the third modified example of the rack shaft in the present embodiment. FIG. 6(a) is a schematic diagram for describing the supply path SP and collection path RP for the cleaning element in the present embodiment, and FIG. 6(b) is a schematic diagram for describing the supply path SP' and collection path RP' for the cleaning element in the comparative example. The cleaning element 2 is not shown in FIG. 4 to FIG.5(d).

As shown in FIG. 4, the extension member 100 includes the cleaning shaft 105, the first coil spring 180 (coil spring for the guide nozzle), and the guide nozzle 190.

The cleaning shaft 105 is a member (pressing member) for pressing the cleaning element 2 against the connection end surface 211 of the optical connector 200. The cleaning shaft 105 is an elongate member extending along the longitudinal axis direction (the Y-axis direction in the drawing) of the extension member 100. The cleaning shaft 105 includes the cleaning head (head member) 110, the second coil spring (coil spring for the head member) 160, and the rack shaft (support member) 170.

The cleaning head 110 is a member that forming the front end portion of the cleaning shaft 105. As shown in FIG. 4, the cleaning head 110 includes the pressing part 120, the neck part (tilting part) 130, the support part 140, and the insertion part 150. The pressing part 120 is tiltably supported by the support part 140 via the neck part 130. The pressing part 120 can tilt in accordance with the inclination of the end surface 211 of the ferrule 210 of the optical connector 200. Although not particularly limited, for example, the cleaning head 110 is made of a resin material, and the pressing part 120, the neck part 130, the support part 140, and the insertion part 150 are integrally formed.

The pressing part 120 has a pressing surface 121 at its front end for pressing the cleaning element 2 against the connection end surface 211 of the optical connector 200. The pressing surface 121 has a flat shape (rectangular shape) so as to correspond to the shape of the end surface 211 of the ferrule 210 of the optical connector 200 to be cleaned. The cleaning element 2 that is supplied from the feeding bobbin 30 and is collected to the winding bobbin 40 is held by the cleaning shaft 105 so that the cleaning element 2 is turned back at the pressing surface.

A pair of insertion grooves 122 are formed at both ends of the pressing surface 121. When the pressing surface 121 is pressed against the end surface 211 of the ferrule 210, the guide pin 212 protruding from the end surface 211 is inserted into the insertion groove 122, therefore the pressing surface 121 can bring the cleaning element 2 into close contact with the end surface 211 of the ferrule 210.

The pressing part 120 is connected to the support part 140 via the neck part 130. The neck part 130 is a leaf spring part having a convexly curved shape. The neck part 130 is elastically deformable in response to the pressing force from the optical connector 200 to the pressing part 120. The neck part 130 tilts the pressing part 120 in accordance with the inclination of the end surface 211 of the ferrule 210 of the optical connector 200. The neck part 130 is narrower than the pressing part 120. The support part 140 to which the neck part 130 is connected has a plate-like shape with a flat (rectangular) cross-sectional shape corresponding to the cross-sectional shape of the pressing part 120.

The insertion part 150 is connected to the rear side of the support part 140. The insertion part 150 is a part inserted into the front end part 171 of the rack shaft 170 and has a plate-like shape having a width narrower than that of the support part 140. The columnar shaft part 151 protruding rearward (in -Y direction in the drawing) and the protrusions 152 protruding laterally (in the X-axis direction in the drawing) are formed at a rear end of the insertion part 150.

As shown in FIG. 4, the second coil spring 160 is interposed between the cleaning head 110 and the rack shaft 170 in a state in which the shaft part 151 of the cleaning head 110 is inserted into the second coil spring 160. The cleaning head 110 is biased forward with respect to the rack shaft 170 by the second coil spring 160. Therefore, the pressing surface 121 of the cleaning head 110 can press the cleaning element 2 against the connection end surface 211 of the optical connector 200 with an appropriate pressing force.

The rack shaft 170 is a member that movably supports the cleaning head 110 in the front-rear direction (the Y-axis direction in the drawing). As shown in FIG. 4, the rack shaft 170 includes the front end part 171, the body part 172, the shoulder parts 173, and the arm parts 175. Although not particularly limited, for example, the rack shaft 170 is made of a resin material, and the front end part 171, the body part 172, the shoulder parts 173, and the arm parts 175 are integrally formed.

The insertion grooves 171a and the windows 171b are formed in the front end part 171 of the rack shaft 170. The insertion grooves 171a are grooves opened to the front end of the rack shaft 170. The insertion part 150 of the cleaning head 110 is movably inserted into the insertion grooves 171a in the front-rear direction (the Y-axis direction in the drawing). Further, the windows 171b are open to the side surfaces of the front end part 171 from the insertion grooves 171a. The protrusions 152 of the insertion part 150 of the cleaning head 110 are inserted into the windows 171b. The cleaning head 110 is guided in the front-rear direction by the insertion grooves 171a, and the windows 171b prevent the cleaning head 110 biased by the second coil spring 160 from falling out forward (in the +Y direction in the drawing).

The body part 172 is connected to the rear side of the front end part 171. The body part 172 has a columnar shape and is an elongate portion extending along the axial direction (the Y-axis direction in the drawing) of the extension member 100. Although the rear portion of the body part 172 is disposed within the housing 20 of the tool main body 10, the other portion of the body part 172 extends forward (in the +Y direction in the drawing) from the front the housing 20.

The upper and lower surfaces 170a and 170b of the body part 172 function as the guide surfaces for guiding the cleaning element 2 supplied to the pressing surface 121 of the cleaning head 110 and collected from the pressing surface 121. The body part 172 is inserted into the first coil spring 180 and also has a function of supporting the first coil spring 180.

As shown in FIG. 5(a), an opening 172a is formed in the body part 172. The opening 172a penetrates between the upper surface 170a and the lower surface 170b of the body part 172. The cleaning element 2 supplied to and collected from the pressing surface 121 of the cleaning head 110 can pass through the opening 172a. The width of the opening 172a is preferably equal to or wider than the width of the cleaning element 2. It is possible to suppress the occurrence of wrinkles in the cleaning element 2 by widening the width of the opening 172a, and it is possible to prevent the occurrence of poor cleaning and malfunctions due to the jamming of the cleaning element 2. The opening 172a corresponds to an example of the "path reversing part" in the aspect of the present invention.

In the present embodiment, the unused cleaning element 2a after supplied from the supply bobbin 30 through the guide cylinder 51 to the extension member 100 first enters the space between the cleaning shaft 105 and the guide nozzle 190 (the space above the cleaning shaft 105 in FIG. 3). Then, as shown in FIG. 6(a), after the cleaning element 2a passes over the upper surface 170a of the rack shaft 170 of the cleaning shaft 105, the cleaning element 2a enters the opening 172a. The cleaning element 2a is guided from the upper surface 170a side to the lower surface 170b side of the rack shaft 170 by the opening 172a. The cleaning element 2a after passing through the opening 172a moves along the lower surfaces 170b and 110b of the rack shaft 170 and the cleaning head 110 and reaches the pressing surface 121 of the cleaning head 110.

Then, the cleaning element 2 moves from the lower side to the upper side along the short axis direction of the pressing surface 121 on the pressing surface 121 (refer to the arrow A in FIG. 3 and FIG. 9(a)).

The cleaning element 2b used on the pressing surface 121 enters the space between the cleaning shaft 105 and the guide nozzle 190 (the space above the cleaning shaft 105 in FIG. 3) from the pressing surface 121. Then, after the cleaning element 2b passes over the upper surfaces 110a and 170a of the cleaning head 110 and the rack shaft 170, the cleaning element 2b enters the opening 172a. The cleaning element 2b is guided from the upper surface 170a side to the lower surface 170b side of the rack shaft 170 by the opening 172a. The cleaning element 2b after passing through the opening 172a moves along the lower surface 170b of the rack shaft 170 and is collected to the winding bobbin 40 via the guide cylinder 52 and the roll 53.

Thus, in the present embodiment, although the supply path SP for supplying the unused cleaning element 2a to the pressing surface 121 of the cleaning head 110 and the collection path RP for collecting the used cleaning element 2b from the pressing surface 121 are arranged along the upper surface 170a and the lower surface 170b of the rack shaft 170, the supply path SP and the collection path RP cross at the above-described opening 172a of the rack shaft 170. That is, the supply path SP switches from the upper surface 170a side to the lower surface 170b side of the rack shaft 170 at the opening 172a, and the collection path RP also switches from the upper surface 170a side to the lower surface 170b side at the opening 172a, thus the opening 172a reverses the supply path SP and the collection path RP between the upper surface 170a side and the lower surface 170b side.

On the other hand, in the optical connector cleaning tool 1' of the comparative example without the opening 172a, as shown in FIG. 6(b), the supply path SP' that supplies the cleaning element 2a to the pressing surface 121' is only disposed on the upper surfaces 170a' and 110a' side of the rack shaft 170' and the cleaning head 110', and the collection path RP' that collects the cleaning element 2b from the pressing surface 121' is only disposed on the lower surfaces 110b' and 170b' side of the cleaning head 110' and the rack shaft 170', therefore the supply path SP' and the collection path RP' are not reversed. Thus, in the comparative example, the cleaning element 2 moves from the upper side to the lower side along the short axis direction of the pressing surface 121' on the pressing surface 121'.

Thus, in the present embodiment, since the supply path SP and the collection path RP are reversed at the opening 172a, the movement direction of the cleaning element 2 on the pressing surface 121 of the cleaning head 110 is opposite to that in the comparative example shown in FIG. 6(b). Therefore, the inclination direction of the pressing part 120' of the cleaning head 110' due to the tension generated at the time of collecting the cleaning element 2b is counterclockwise in the comparative example shown in FIG. 6(b), while the inclination direction of the pressing part 120 of the cleaning head 110 due to the tension is clockwise in the present embodiment shown in FIG. 6(a). In other words, in the present embodiment, the inclination direction of the pressing part 120 of the cleaning head 110 is reversed from that in the comparative example by reversing the supply path SP and the collection path RP at the opening 172a.

The configuration of the path revering part that reverses the supply path SP and the collection path RP is not limited to the above-mentioned opening 172a. Although not particularly limited, for example, the path reversing part may be configured as follows.

As shown in FIG. 5(b), two openings 172b and 172c may be formed in the body part 172 of the rack shaft 170. Both of the openings 172b and 172c penetrate between the upper surface 170a and the lower surface 170b of the rack shaft 170. The cleaning element 2 can pass through the openings 172b and 172c. The two openings 172b and 172c are disposed at the same position in the longitudinal direction (Y direction in the drawing) of the rack shaft 170.

The unused cleaning element 2a that is supplied from the feeding bobbin 30 to the pressing surface 121 passes through the first opening 172b. The unused cleaning element 2a moves from the upper surface 170a side to the lower surface 170b side of the rack shaft 170 by passing through the first opening 172b.

On the other hand, the used cleaning element 2b that is collected from the pressing surface 121 to the winding bobbin 40 passes through the second opening 172c. The used cleaning element 2b also moves from the upper surface 170a side to the lower surface 170b side of the rack shaft 170 by passing through the second opening 172c.

In this way, it is possible to ensure a non-contact state between the cleaning bodies 2a and 2b by individually passing the supply path SP and the collection path RP through the openings 172b and 172c, and it is possible to suppress contamination of the unused cleaning element 2a by the used cleaning element 2b.

Alternatively, the shape of the openings may be as shown in FIG. 5(c).

In the example shown in FIG. 5(c), each of the openings 172d and 172e has a right-angled triangular shape with an acute angle part. The first opening 172d is disposed so that the acute angle part of the first opening 172d is located on the front side (in the +Y direction in the drawing) of the rack shaft 170. The width of the first opening 172d is narrower toward the front end of the rack shaft 170. On the other hand, the second opening 172e is disposed so that the acute angle part of the second opening 172e is located on the rear end side of the rack shaft 170 (in the -Y direction in the figure). The width of the second opening 172e is narrower toward the rear end of the rack shaft 170. That is, the two openings 172d and 172e are disposed in opposite directions to each other in the longitudinal direction of the rack shaft 170.

Furthermore, the two openings 172d and 172e are disposed so that the acute angle parts (narrow parts) overlap each other and are shifted from each other in the longitudinal direction of the rack shaft 170 (in the Y direction in the figure). That is, the two triangular openings 172d and 172e are disposed complementarily so as to partially overlap. Therefore, it is possible to dispose the two openings 172d and 172e so that the wide part of one opening 172d or 172e does not overlap with the other opening 172e or 172d in the longitudinal direction (in the Y direction in the drawing) of the rack shaft 170. The width of the wide part of each of the openings 172e and 172d is preferably equal to or wider than the width of the cleaning element 2.

Similar to the above-described first opening 172b, the unused cleaning element 2a that is supplied from the feeding bobbin 30 to the pressing surface 121 passes through the first opening 172d. On the other hand, similar to the above-described second opening 172c, the used cleaning element 2b that is collected from the pressing surface 121 to the winding bobbin 40 passes through the second opening 172e. In this way, it is possible to ensure a non-contact state between the cleaning bodies 2a and 2b by individually passing the supply path SP and the collection path RP through the openings 172d and 172e, and it is possible to suppress contamination of the unused cleaning element 2a by the used cleaning element 2b.

Further, the wide parts of the two openings 172d and 172e can be made as wide as possible by shifting the two openings 172d and 172e from each other in the longitudinal direction of the rack shaft 170 (in the Y direction in the figure), and it is possible to suppress the occurrence of wrinkles in the cleaning element 2.

Here, regarding the front and back surfaces of the cleaning element 2, the surface (cleaning surface) to be used for cleaning the connection end surface 211 of the optical connector 200 may be specified. In this case, it is necessary that the cleaning surface (front surface) of the cleaning element 2 faces the connection end surface 211 and the back surface of the cleaning element 2 faces the pressing surface 121 on the pressing surface 121. And, when switching the movement direction of the cleaning element 2 on the pressing part 120 in the opposite direction from the comparative example shown in FIG. 6(b) while maintaining the orientation of the front and back surfaces of the cleaning element 2, it is necessary to twist the cleaning element 2a by 180 degrees on the supply path SP and twist the cleaning element 2b by 180 degrees on the collection path RP.

On the other hand, in the present embodiment, since the first opening 172d through which the supply path SP passes is narrower toward the front end of the rack shaft 170, the narrow part (acute angle part) can be used to smoothly twist the unused cleaning element 2a by 180 degrees. Similarly, since the second opening 172e through which the collection path RP passes is narrower toward the rear end of the rack shaft 170, the narrow part (acute angle part) can be used to smoothly twist the used cleaning element 2b by 180 degrees.

As shown in FIG. 5(c), it is possible to pass the cleaning bodies 2a and 2b through the first and second openings 172d and 172e in a state where the backsides of the cleaning bodies 2a and 2b face each other by complementarily disposing the acute angle parts of the two openings 172d and 172e, and it is possible to further suppress the contamination of the unused cleaning element 2a.

Alternatively, although not particularly illustrated, a groove (cutout) may be formed on either side surface 170c or 170d of the body part 172 instead of the above-described openings. The groove also penetrates between the upper surface 170a and the lower surface 170b of the body part 172. The cleaning element 2 can pass through the groove.

Alternatively, as shown in FIG. 6(d), two spiral grooves 172f and 172g may be formed in the body part 172 of the rack shaft 170.

The first groove 172f is formed on the upper surface 170a, one side surface 170d, and the lower surface 170b of the rack shaft 170. The first groove 172f is formed in a spiral shape on the outer peripheral surface of the rack shaft 170. On the other hand, the second groove 172g is formed on the upper surface 170a, the other side surface 170c, and the lower surface 170b of the rack shaft 170. The second groove 172g is formed in a spiral shape on the outer peripheral surface of the rack shaft 170. The spiral rotation direction of the grooves 172f and 172g is not limited to the above and may be in the opposite direction to the example shown in FIG. 6(d). The two grooves 172f are 172g are complementarily disposed to overlap each other in the longitudinal direction (Y direction in the figure) of the rack shaft 170.

The unused cleaning element 2a that is supplied from the feeding bobbin 30 to the pressing surface 121 passes through the first groove 172f. The unused cleaning element 2a moves from the upper surface 170a side to the lower surface 170b side of the rack shaft 170 by passing through the first groove 172f.

On the other hand, the used cleaning element 2b that is collected from the pressing surface 121 to the winding bobbin 40 passes through the second groove 172g. The used cleaning element 2b also moves from the upper surface 170a side to the lower surface 170b side of the rack shaft 170 by passing through the second groove 172g.

The width of each of the grooves 172f are 172g is preferably equal to or wider than the width of the cleaning element 2. It is possible to suppress the occurrence of wrinkles in the cleaning element 2 by widening the widths of the grooves 172f are 172g. Further, since the grooves 172f and 172g are spiral in shape, the cleaning element 2 can be smoothly guided from the upper surface 170a side to the lower surface 170b side of the rack shaft 170. Furthermore, it is possible to ensure a non-contact state between the cleaning bodies 2a and 2b by individually passing the supply path SP and the collection path RP through the grooves 172f and 172g, and it is possible to suppress contamination of the unused cleaning element 2a by the used cleaning element 2b.

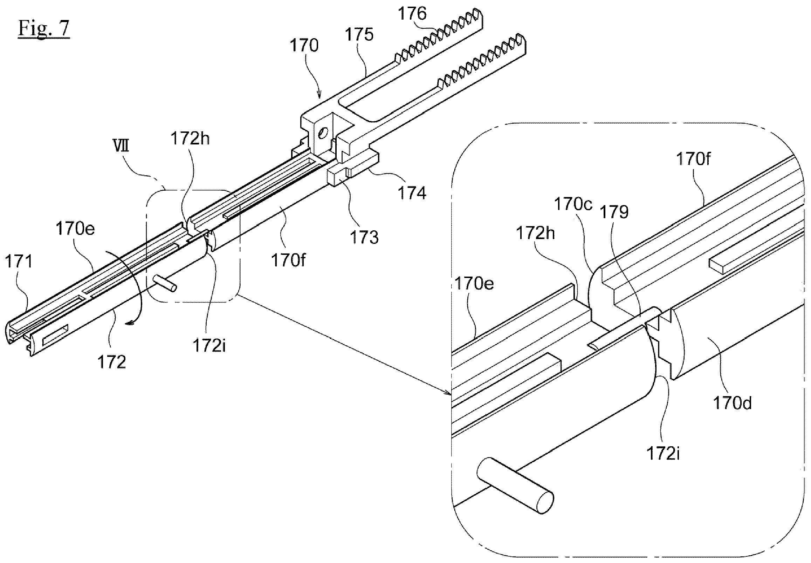

Alternatively, as shown in FIG. 7, the straight-shaped grooves 172h and 172i may be formed in the rack shaft 170 instead of the spiral grooves 172f and 172g. FIG. 7 is a perspective view showing the fourth modified example of the rack shaft 170 in the present embodiment and an enlarged view of a part VII.

The first groove 172h is formed on one side surface 170c of the rack shaft 170, while the second groove 172i is formed on the other side surface 170d of the rack shaft 170. Both of the grooves 172h and 172i penetrate linearly through between the upper surface 170a and the lower surface 170b of the rack shaft 170 in the thickness direction of the rack shaft 170, and the cleaning element 2 can pass through the grooves 172h and 172i. The two grooves 172h and 172i are disposed at the same position in the longitudinal direction (Y direction in the drawing) of the rack shaft 170. The width of each of the grooves 172h and 172i is preferably equal to or wider than the width of the cleaning element 2. It is possible to suppress the occurrence of wrinkles in the cleaning element 2 by widening the widths of the grooves 172h and 172i.

Similar to the above-described first groove 172f, the unused cleaning element 2a that is supplied from the feeding bobbin 30 to the pressing surface 121 passes through the first groove 172h. On the other hand, similar to the above-described second groove 172g, the used cleaning element 2b that is collected from the pressing surface 121 to the winding bobbin 40 passes through the second groove 172i. In this way, it is possible to ensure a non-contact state between the cleaning bodies 2a and 2b by individually passing the supply path SP and the collection path RP through the grooves 172h and 172i, and it is possible to suppress contamination of the unused cleaning element 2a by the used cleaning element 2b.

In this case, as shown in the enlarged view of FIG. 7, the rack shaft 170 may include a rotating part 179 disposed between the first groove 172h and the second groove 172i. The rotating part 179 can relatively rotate the front end side part 170e of the rack shaft 170 (the part on the front side of the rotating part 179 in the rack shaft 170) with respect to the rear end side part 170f of the rack shaft 170 (the part on the rear side of the rotating part 179 in the rack shaft 170).

For example, the supply path SP and the collection path RP can be easily reversed by rotating the front end side part 170e by 180 degrees with respect to the rear end side part 170f using the rotating part 179 in a state where the cleaning element 2 is hung around the cleaning shaft 105 without passing the cleaning element 2 through the grooves 172h and 172i (i.e., in a state where the supply path SP is disposed only on the upper surfaces 110a and 170a side of the cleaning shaft 105 and the collection path RP is disposed only on the lower surface 110b and 170b side of the cleaning shaft 105). The unused cleaning element 2a passes through the first groove 172h and the used cleaning element 2b passes through the second groove 172i by rotating the front end side part 170e by the rotating part 179. In this way, since the cleaning shaft 105 includes the rotating part 179, it is possible to easily reverse the supply path SP and the collection path RP.

Alternatively, although not particularly illustrated, the opening and groove may be formed in the rack shaft 170. One of the supply path SP or the collection path RP may pass through the opening, and the other of the collection path RP or the supply path SP may pass through the groove.

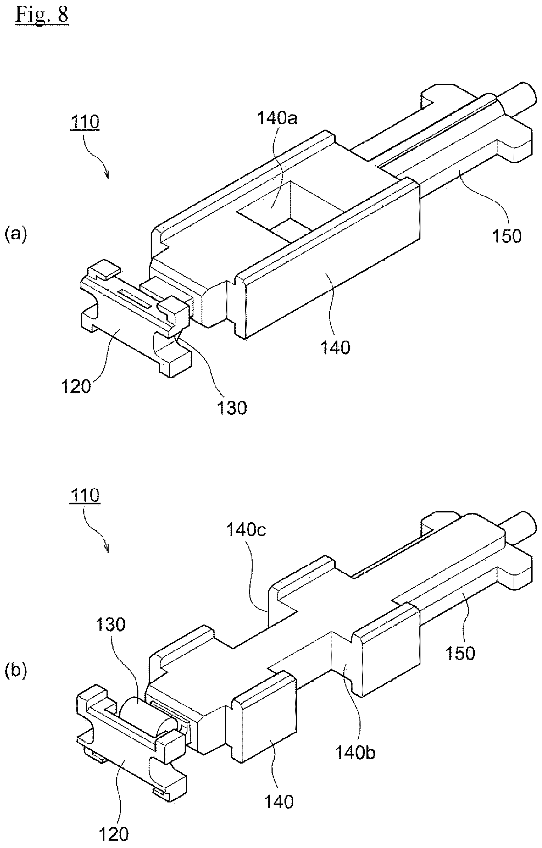

Alternatively, the above-described opening and groove may be formed in the cleaning head 110 instead of the rack shaft 170. FIG. 8(a) is a perspective view showing the first modified example of the cleaning head 110 in the present embodiment, and FIG. 8(b) is a perspective view showing the second modified example of the cleaning head 110 in the present embodiment.

For example, as shown in FIG. 8(a), the opening 140a may be formed in the support part 140 of the cleaning head 110. In this case, the unused cleaning element 2a that is supplied from the feeding bobbin 30 to the pressing surface 121 passes through the opening 140a, and the used cleaning element 2b that is collected from the pressing surface 121 to the winding bobbin 40 also passes through the opening 140a. Alternatively, although not particularly illustrated, two openings may be formed in the support part 140 of the cleaning head 110, and the supply path SP and the collection path RP may individually pass through the two openings.

Alternatively, as shown in FIG. 8(b), the two grooves 140b and 140c may be formed on the side surfaces of the support part 140 of the cleaning head 110. In this case, the unused cleaning element 2a that is supplied from the feeding bobbin 30 to the pressing surface 121 passes through one groove 140b, while the used cleaning element 2b that is collected from the pressing surface 121 to the winding bobbin 40 passes through the other groove 140c.

Alternatively, although not particularly illustrated, the opening and groove may be formed in the support part 140 of the cleaning head 110. One of the supply path SP or the collection path RP may pass through the opening, and the other of the collection path RP or the supply path SP may pass through the groove.

Alternatively, although not particularly illustrated, the space formed between the cleaning head 110 and the rack shaft 170 may be used as a pair of grooves through which the cleaning element 2 passes. In this case, the rotating part 179 described above may be disposed between the cleaning head 110 and the rack shaft 170, and the cleaning head 110 may be rotatable with respect to the rack shaft 170.

Returning to FIG. 4, the pair of shoulder parts 173 of the rack shaft 170 are connected to the rear end of the body part 172 of the rack shaft 170. The shoulder parts 173 protrude laterally (in the X-axis direction in the drawing) from the rear end of the body part 172 and are disposed in the windows 20b (see FIG. 3) of the first and second housings 21 and 22.

Further, the protrusions 174 protruding laterally (in the X-axis direction in the drawing) are formed in the shoulder parts 173. **In** a state where the shoulder parts 173 are disposed in the windows 20b of the housings 21 and 22, the protrusions 174 protrude from the windows 20b and are fitted into the windows 197 (described later) of the guide nozzle 190 (refer to FIG. 3).

The pair of arm parts 175 are connected to the lower side of the shoulder parts 173 and extend rearward (the -Y direction in the drawing) from the shoulder parts 173. The arm parts 175 are respectively accommodated in the accommodating parts 20c (see FIG. 3) of the first and second housings 21 and 22.

The holding holes 175a are formed in the front end portions of the pair of arm parts 175. The pin 178 is inserted into the holding holes 175a, and a roll 177 is rotatably supported by the pin 178. The used cleaning element 2 guided along the lower surface of the body part 172 is guided toward the winding bobbin 40 by the roll 177 and the guide cylinder 52 and the roll 53 of the above-described tool main body 10. At this time, the cleaning element 2 is turned back by the roll 177, and the cleaning element 2 is hung around the roll 177. As described above, since the cleaning element 2 is also turned back by the roll 53 of the tool main body 10, as a result, the cleaning element 2 is bridged between the rolls 177 and 53.

Further, the rack gear 176 is formed at a rear portion of each of the arm parts 175. The winding bobbin 40 is disposed between the pair of rack gears 176, and the rack and pinion mechanism is configured by engaging the above-described pinion gear 71 of the transmission member 70 with the rack gear 176.

The guide nozzle 190 is a member having the tubular part 191 and the plate parts 196. The tubular part 191 includes the front end part 192 that is inserted into the adapter 240 when the optical connector 200 is cleaned and the main body part 195 that is connected to the rear side of the front end part 192. The convex portions 193 are formed on the upper, lower, left, and right outer surfaces of the front end part 192. When the front end part 192 is inserted into the adapter 240, the convex portions 193 are fitted into the grooves 242 formed in the insertion port 241 of the adapter 240.

The tubular part 191 includes the inner hole penetrating in the axial direction (the Y-axis direction in the drawing), and the cleaning shaft 105 and the first coil spring 180 are accommodated in the inner hole. The tubular part 191 also has a function of protecting the cleaning element 2 that moves along the upper and lower surfaces 170a and 107b of the body part 172 of the rack shaft 170. Although not particularly limited, for example, the guide nozzle 190 is made of a resin material, and the front end part 192, the main body part 195, and the plate parts 196 are integrally formed.

As shown in FIG. 2 and FIG. 3, the support part 140 of the cleaning head 110 is accommodated in the inner hole 194 of the front end part 192 of the tubular part 191. The pressing part 120 of the cleaning head 110 connected to the support part 140 via the neck part 130 protrudes forward (in the +Y direction in the drawing) from the opening 194a of the inner hole 194 of the front end part 192 of the tubular part 191.

On the other hand, the shoulder parts 173 and the arm parts 175 of the rack shaft 170 protrude rearward (toward the -Y direction in the drawing) from the rear opening 195a of the main body part 195 of the tubular part 191 of the guide nozzle 190. Then, the protrusions 174 of the rack shaft 170 are fitted into the windows 197 formed in the plate parts 196 of the guide nozzle 190, therefore the rack shaft 170 and the guide nozzle 190 are fixed to each other.

Further, the main body part 195 of the tubular part 191 of the guide nozzle 190 has a tapered portion 195b having a larger inner diameter at a central portion thereof. The first coil spring 180 is interposed between the tapered portion 195b and the front surface of the housing 20. The first coil spring 180 biases the guide nozzle 190 in a direction (the +Y direction in the drawing) away from the tool main body 10.

Next, an example of the method of using the optical connector cleaning tool 1 described above will be described with reference to FIG. 9(a) and FIG. 9(b).

FIG. 9(a) and FIG. 9(b) are side views showing the state of use of the optical connector cleaning tool 1 in the present embodiment, FIG. 9(a) is a view showing a state where the tool main body 10 is moved toward the extension member 100, and FIG. 9(b) is a view showing a state where the tool main body 10 is moved backward from the extension member 100.

When the connection end surface 211 of the optical connector 200 is cleaned using the optical connector cleaning tool 1, the operator first inserts the front end portion of the extension member 100 of the cleaning tool 1 into the insertion port 241 of the adapter 240. As a result, the pressing surface 121 of the cleaning head 110 presses the cleaning element 2 against the end surface 211 of the ferrule 210. At this time, the convex portions 193 of the front end part 192 of the guide nozzle 190 of the extension member 100 are fitted into the grooves 242 of the adapter 240, therefore the pressing surface 121 of the cleaning head 110 is positioned with respect to the ferrule 210 of the optical connector 200.

Next, when the operator pushes the tool main body 10 with respect to the extension member 100, as shown in FIG. 9(a), the first coil spring 180 is compressed, and the distance between the roll 177 of the extension member 100 and the roll 53 of the tool main body 10 increases by a predetermined length L.

Therefore, the length of the cleaning element 2 existing between the supply-side guide cylinder 51 and the roll 177 is shortened by the predetermined length L, while the length of the cleaning element 2 existing between the rolls 177 and 53 is lengthened by the predetermined length L. As a result, the cleaning element 2 on the pressing surface 121 is pulled toward the winding bobbin 40 side (collection side) and the cleaning element 2 slides while being pressed against the end surface 211 of the ferrule 210 to wipe off the dirt adhering to the end surface 211.

At this time, in the present embodiment, as shown FIG. 6(a), the supply path SP and the collection path RP are reversed at the opening 172, and the cleaning element 2 moves from the lower side to the upper side on the pressing surface 121 of the cleaning head 110. Further, in the present embodiment, the end surface 211 of the ferrule 210 to be cleaned is inclined so that the upper part protrudes more than the lower part (see FIG. 6(a)). Therefore, even if the pressing part 120 of the cleaning head 110 is pulled by the tension applied to the cleaning element 2b at the time of collecting of the cleaning element 2b, the inclination direction of the pressing part 120 matches the inclination direction of the connecting end face 211 of the optical connector 200, and it is possible to properly clean the connection end surface 211d.

On the other hand, when using the optical connector cleaning tool 1' of the comparative example described above (see FIG. 6(b)), the inclination direction of the pressing part 120' due to the tension applied to the cleaning element 2 may be opposite to the inclination direction of the connecting end surface 211 of the optical connector 200, and the connecting end face 211 may not be properly cleaned.

As shown in FIG. 9(a), the rack gear 176 rotates the pinion gear 71 by pushing the tool main body 10 by the operator. However, since the rotation of the winding bobbin 40 in the direction (clockwise in FIG. 9(a)) opposite to the winding direction (counterclockwise in FIG. 9(a)) is prohibited by the ratchet pawl 60, a slip occurs between the leaf spring portion 72 of the transmission member 70 and the friction surface of the inner ring portion 42. Therefore, in this case, the transmission member 70 idles and the winding bobbin 40 does not rotate.

Next, when the operator releases the pushing of the tool main body 10 with respect to the extension member 100, as shown in FIG. 9(b), the tool main body 10 is moved backward with respect to the extension member 100 by the elastic force of the first coil spring 180, the distance between the roll 177 of the extension member 100 and the roll 53 of the tool main body 10 is shortened by the predetermined length L, and the rack gear 176 rotates the pinion gear 71 at the same time. The rotational force of the pinion gear 71 is transmitted to the winding bobbin 40 via the leaf spring portion 72 of the transmission member 70 and the friction surface of the inner ring portion 42, the winding bobbin 40 rotates, and the used cleaning element 2 is wound around the winding bobbin 40.

At the same time, the length of the cleaning element 2 existing between the supply-side guide cylinder 51 and the roll 177 is lengthened by a predetermined length L. At this time, since the distance between the pressing surface 121 of the cleaning head 110 and the roll 177 is constant and the cleaning element 2 is hung around the pressing surface 121 of the cleaning head 110, the unused cleaning element 2 having a length corresponding to the predetermined length L is sent out from the feeding bobbin 30.

When the cleaning is finished, the operator removes the cleaning tool 1 from the adapter 240 by pulling out the extension member 100 from the insertion port 241 of the adapter 240.

As described above, in the present embodiment, since it is possible to reverse the turning-back direction of the cleaning element 2 on the pressing surface 121 of the cleaning shaft 105 by reversing the supply path SP and the collection path RP at the opening 172a, it is possible to switch the inclination direction of the pressing surface 121 and it is possible to properly clean the connection end surface 121 of the optical connector 200.

For example, when manufacturing the optical connector cleaning tool 1, one in which the cleaning element 2 moves from the upper side to the lower side on the pressing surface 121 may be manufactured by not passing the cleaning element 2 through the opening 172a, and one in which the cleaning element 2 moves from the lower side to the upper side on the pressing surface 121 may be manufactured by passing the cleaning element 2 through the opening 172a. That is, it is possible to manufacture the products with a different turning-back direction of the cleaning element 2 on the pressing surface 121 by the presence or absence of the passage of the cleaning element 2 through the opening 172a. Therefore, it is possible to manufacture two types of the optical connector cleaning tool 1 with a different inclination direction of the pressing surface 121 using the same parts.

Alternatively, the user of the optical connector cleaning tool 1 may disassemble and assemble the optical connector cleaning tool 1 to switch the inclination direction of the pressing surface 121.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

### [EXPLANATIONS OF LETTERS OR NUMERALS]

1 ... Optical connector cleaning tool
2 ... Cleaning element
2a ... Unused cleaning element
2b ... Used cleaning element
10 ... Tool main body
30 ... Feeding bobbin
40 ... Winding bobbin
100 ... Extension member
105 ... Cleaning shaft
110 ... Cleaning head
110a ... Upper surface
110b ... Lower surface
120 ... Pressing part
121 ... Pressing surface
140 ... Support part
140a ... Opening
140b and 140c ... Groove
170 ... Rack shaft
170a ... Upper surface
170b ... Lower surface
170c and 170d ... Side surface
170e ... Frone end side part
170f ... Rear end side part
172 ... Body part
172a ... Opening
172b and 172d ... First opening
172c and 172e ... Second opening
172f and 172h ... First groove
172g and 172i ... Second groove
179 ... Rotating part
190 ... Guide nozzle
SP ... Supply path
RP ... Collection path
200 ... Optical connector
210 ... Ferrule
211 ... Connection end surface

## Claims

1. An optical connector cleaning tool that cleans a connection end surface of an optical connector, the optical connector cleaning tool comprising:
a cleaning shaft that comprises a pressing surface and that holds a cleaning element having a belt shape so that the cleaning element is turned back at the pressing surface that presses the cleaning element against the connection end surface;
a supply part that supplies the cleaning element to the pressing surface via a supply path; and
a collection part that collects the cleaning element from the pressing surface via a collection path, wherein
the cleaning shaft comprises:
a first main surface; and
a second main surface opposite to the first main surface,
the supply path and the collection path are along the first and second surfaces, and
the optical connector cleaning tool comprises a path reversing part that reverses the supply path and the collection path between the first main surface side and the second main surface side.

2. The optical connector cleaning tool according to claim **1,** wherein
the path reversing part includes an opening or a groove that penetrates between the first main surface and the second main surface and at which the supply path and the collection path cross each other.

3. The optical connector cleaning tool according to claim 2, wherein
the path reversing part reverses the supply path and the collection path while ensuring a non-contact state between the cleaning element passing through the supply path and the cleaning element passing through the collection path.

4. The optical connector cleaning tool according to any one of claims 1 to 3, wherein
the path reversing part includes:
a first opening or a first groove that guides the cleaning element passing through the supply path from the first main surface side to the second main surface side; and
a second opening or a second groove that guides the cleaning element passing through the collection path from the first main surface side to the second main surface side.

5. The optical connector cleaning tool according to claim 4, wherein
the first opening and the second opening are shifted from each other in a longitudinal direction of the cleaning shaft.

6. The optical connector cleaning tool according to claim 4 or 5, wherein
the first opening has a shape in which a width of the first opening is narrower toward a front end of the cleaning shaft, and
the second opening has a shape in which a width of the second opening is narrower toward a rear end of the cleaning shaft.

7. The optical connector cleaning tool according to claim 4, wherein
the first groove and the second groove include spiral grooves formed on an outer circumferential surface of the cleaning shaft.

8. The optical connector cleaning tool according to claim 4 or 7, wherein
the cleaning shaft comprises a rotating part disposed between the first groove and the second groove, and
the rotating part rotates a front end side part of the cleaning shaft with respect to a rear end side part of the cleaning shaft.

9. The optical connector cleaning tool according to any one of claims 1 to 8, wherein
the cleaning shaft comprises:
a head member that comprises the pressing surface; and
a support member that supports the head member, and
the path reversing part is disposed in the head member.

10. The optical connector cleaning tool according to any one of claims 1to 8, wherein
the cleaning shaft comprises:
a head member that comprises the pressing surface; and
a support member that supports the head member, and
the path reversing part is disposed in the support member.
